# EUROPÄISCHE PATENTANMELDUNG

(11) **EP 3 882 746 A1**
(43) Veröffentlichungstag der Anmeldung: **22.09.2021**
(21) Anmeldenummer: 21160391.5
(22) Anmeldetag: 03.03.2021
(51) Int. Cl.: G06F 3/01, F24C 7/08, F24C 15/20

(54) **GESTENSTEUERMODUL FÜR EIN HAUSHALTSGERÄT**

(30) Priorität: 20.03.2020 CN 202010203660
(71) Anmelder: Diehl AKO Stiftung & Co. KG, 88239 Wangen (DE)
(72) Erfinder: Li, Zhongke, Nanjing, 211100 (CN); Shi, Lin, Nanjing, 211100 (CN)
(74) Vertreter: Diehl Patentabteilung

(57) **Zusammenfassung**

Die vorliegende Erfindung betrifft ein berührungsloses Gestensteuermodul, das auf dem Prinzip der Infrarotreflexion basiert, umfassend: einen Induktionsbereich, der aus mehreren Infrarot-Emissionsröhren und mehreren Infrarot-Empfangsröhren besteht, wobei die Infrarot-Emissionsröhren und die Infrarot-Empfangsröhren abwechselnd in einer Erstreckungsrichtung angeordnet sind; eine Steuerschaltung zum Steuern des Ein- und Ausschaltens der einzelnen Infrarot-Emissionsröhren und der einzelnen Infrarot-Empfangsröhren; einen Signalprozessor zum Empfangen und Verarbeiten der durch die Vielzahl von Infrarot-Empfangsröhren erzeugten Signale und zum Bestimmen der Koordinatenposition des Objekts in einer Erstreckungsrichtung oberhalb des Induktionsbereichs. Das erfindungsgemäße Gestensteuermodul ermöglicht eine präzise berührungslose Steuerung und eine feine Gangregelung und somit eine stufenlose Geschwindigkeitsregelung des Hausgerätes. Weiterhin betrifft die vorliegende Erfindung ein Haushaltsgerät mit dem Gestensteuermodul sowie eine Verwendung des Gestensteuermoduls in dem Haushaltsgerät.

## Beschreibung

Die vorliegende Erfindung betrifft ein Gestensteuermodul, ein Haushaltsgerät mit dem Gestensteuermodul sowie eine Verwendung des Gestensteuermoduls in dem Haushaltsgerät.

Der Einsatz einer Gestensteuerung bei Küchengeräten oder sanitären Geräten ist besonders vorteilhaft, da durch die berührungslose Bedienung die Reinigung und Hygiene von den Geräten erhalten bleibt. Gleichzeitig sind die Hände des Benutzers aufgrund der berührungslosen Bedienung nicht verschmutzt. Das berührungslose Gestensteuermodul im Stand der Technik besteht im Allgemeinen aus einer Infrarot-Empfangsröhre und einer Infrarot-Emissionsröhre oder aus einer Infrarot-Empfangsröhre und mehreren Infrarot-Emissionsröhren. Ein solches Gestensteuermodul kann die Annäherung, das Verweilen oder die ungefähre Passierrichtung eines Objekts nur im Bereich der Infrarot-Empfangsröhre erfassen, so dass eine relativ einfache Geste und damit auch nur begrenzte Steuerfunktion ermöglichen. Darüber hinaus ermöglicht ein solches Gestensteuermodul keine präzise berührungslose Steuerung vom Haushaltsgerät. Mit der kontinuierlichen Erweiterung der Funktionen vom Haushaltsgerät ist es dringend erforderlich, die Bedienfunktion des Gestensteuermoduls zu erweitern.

Die Aufgabe der vorliegenden Erfindung besteht darin, ein verbessertes Gestensteuermodul, ein Haushaltsgerät mit dem Gestensteuermodul sowie eine Verwendung des Gestensteuermoduls in dem Haushaltsgerät zu schaffen.

Gemäß einem ersten Aspekt der Erfindung ist ein berührungsloses Gestensteuermodul vorgesehen, das auf dem Prinzip der Infrarotreflexion basiert, umfassend:
- einen Induktionsbereich, der aus mehreren Infrarot-Emissionsröhren und mehreren Infrarot-Empfangsröhren besteht, wobei die Infrarot-Emissionsröhren und die Infrarot-Empfangsröhren abwechselnd in einer Erstreckungsrichtung angeordnet sind;
- eine Steuerschaltung zum Steuern des Ein- und Ausschaltens der einzelnen Infrarot-Emissionsröhren und der einzelnen Infrarot-Empfangsröhren;
- einen Signalprozessor zum Empfangen und Verarbeiten der durch mehrere Infrarot-Empfangsröhren erzeugten Signale und zur Bestimmung der Koordinatenposition des Objekts in einer Erstreckungsrichtung oberhalb des Induktionsbereichs.

Das erfindungsgemäße Gestensteuermodul ermöglicht eine berührungslose Gestenbedienung. Bei der vorliegenden Erfindung kann es sich bei den mehreren Infrarot-Emissionsröhren um mindestens drei Infrarot-Leuchtdioden handeln. Die mehreren Infrarot-Emissionsröhren können Infrarotlicht emittieren, dessen Wellenlänge zwischen 770nm und 1000nm liegen kann. Das Infrarotlicht kann bei Annäherung eines Objekts, wie einer Hand des Benutzers, reflektiert und von den Infrarot-Empfangsröhren empfangen werden. Die mehreren Infrarot-Empfangsröhren können als mindestens drei lichtempfindlichen Infrarotdioden oder lichtempfindlichen Infrarottrioden ausgebildet sein. Die Infrarot-Emissionsröhren und die Infrarot-Empfangsröhren sind abwechselnd in einer Erstreckungsrichtung angeordnet. Die Erstreckungsrichtung ist dabei die Anordnungsrichtung von den Infrarot-Emissionsröhren und den Infrarot-Empfangsröhren. Durch die abwechselnde Anordnung wird gegenüber dem Gestenbedienungsmodul aus dem Stand der Technik ein vergrößerter Induktionsbereich bzw. eine bedienbare Position bereitgestellt, so dass verschiedenartige Gesten erfassbar sind. Durch die abwechselnde Anordnung wird ein wechselseitiges Multiplexing von den benachbarten Infrarot-Emissionsröhren und den Infrarot-Empfangsröhren ermöglicht. Beispielsweise kann eine Infrarot-Empfangsröhre sowohl das Infrarotlicht, das von der Infrarot-Emissionsröhre auf einer Seite emittiert und von einem Objekt reflektierte wird, als auch das Infrarotlicht, das von der Infrarot-Emissionsröhre auf der anderen Seite emittiert und von dem Objekt reflektierte wird, empfangen. Das von der Infrarot-Emissionsröhre emittierte Infrarotlicht kann sowohl von der Infrarot-Empfangsröhre auf einer Seite, als auch von der Infrarot-Empfangsröhre auf der anderen Seite durch Reflexion des Objekts empfangen werden. Dadurch können Herstellungskosten der Hardware reduziert werden.

Die Steuerschaltung dient zum Steuern des Ein- und Ausschaltens der einzelnen Infrarot-Emissionsröhren und der einzelnen Infrarot-Empfangsröhren. Insbesondere steuert die Steuerschaltung die Zustände der einzelnen Infrarot-Emissionsröhren und Infrarot-Empfangsröhren gemäß einer vorbestimmten Zeitreihe. Das Gestensteuermodul im Stand der Technik umfasst im Allgemeinen nur eine Infrarot-Empfangsröhre, deren Infrarot-Emissionsröhre ständig eingeschaltet bleiben kann. In dem erfindungsgemäßen Gestensteuermodul kann jedoch das von der einzelnen Infrarot-Emissionsröhre emittierte Infrarotlicht von mehreren Infrarot-Empfangsröhren gleichzeitig empfangen werden, so dass es notwendig ist das Ein- und Ausschalten der einzelnen Infrarot-Emissionsröhren und der einzelnen Infrarot-Empfangsröhren zu verwalten.

Der Signalprozessor dient zum Empfangen und Verarbeiten der durch mehrere Infrarotempfangsröhren erzeugten Signale und zur Bestimmung der Koordinatenposition des Objekts in einer Erstreckungsrichtung oberhalb des Induktionsbereichs. Wenn sich das Objekt oberhalb des Induktionsbereichs bewegt, bestimmt der Signalprozessor gemäß den empfangenen Signalen der einzelnen Infrarot-Empfangsröhren, z.B. durch den Vergleich der Signale, dass sich das Objekt über einer oder mehreren Infrarot-Empfangsröhren befindet, um die Koordinatenposition des Objekts in der Erstreckungsrichtung zu bestimmen.

Im Vergleich zum vorhandenen Gestenerfassungsmodul hat sich auch die bedienbare Position aufgrund der Vergrößerung des Induktionsbereichs entsprechend erhöht. Erfindungsgemäß ermöglicht die Positionierung des Objekts nahe an dem Induktionsbereich, so dass verschiedenartige Gesten und Bedienfunktionen durch die genaue Position entsprechend realisiert werden.

In der vorliegenden Erfindung können beispielsweise Koordinaten im Induktionsbereich mehreren unterschiedlichen Bedienfunktionen zugeordnet werden. Beispielsweise ist der Induktionsbereich in mehrere Koordinatenintervalle aufgeteilt, wobei jedes Koordinatenintervall eine Funktion des Haushaltsgeräts repräsentieren kann, wodurch die zugeordnete Funktion gemäß einer Koordinatenposition des Objekts realisiert werden kann. Mit dem erfindungsgemäßen Gesteninduktionsmodul können unterschiedliche Positionen des sich nähernden Objektes geortet werden und somit eine präzisere berührungslose Steuerung realisiert werden. Außerdem kann durch das erfindungsgemäße Gestensteuermodul auch die Gänge des Haushaltsgeräts eingestellt werden. Beispielsweise kann der Induktionsbereich in verschiedene Gänge gemäß den Koordinaten aufgeteilt werden, wobei die verschiedenen Gänge des Haushaltsgeräts gemäß den Koordinaten des Objektes aufgelöst werden, so dass eine Mehrgangeinstellung des Haushaltsgeräts ermöglicht. Insbesondere erfolgt eine stufenlose Einstellung unmittelbar abhängig von der ermittelten Koordinatenposition. Bürstenlose Motoren und Frequenzumrichter werden zunehmend im Gebiet des Haushaltsgeräts eingesetzt, wodurch auch die Möglichkeit einer stufenlosen Einstellung auftritt. Die Feinpositionierung der Koordinatenposition durch das erfindungsgemäße Gestensteuermodul erfüllt in besonders vorteilhafter Weise die Anforderungen an eine stufenlose Einstellung.

Es ist zu beachten, dass das erfindungsgemäße berührungslose Gestensteuermodul nicht eine einfache Kombination der Module, die im Stand der Technik aus einer Infrarot-Empfangsröhre und einer Infrarot-Emissionsröhre oder aus einer Infrarot-Empfangsröhre und mehreren Infrarot-Emissionsröhren bestehen. Vielmehr wird die Gestenerkennung des Gestensteuermoduls, insbesondere die Positionierung von Objekten in der Nähe des Induktionsbereichs umfassend und organisch erreicht, indem einer alternierenden spaltenartigen Anordnung von den Infrarot-Emissionsröhren und den Infrarot-Empfangsröhren mit der Steuerung solcher Infrarotröhren und der Verarbeitung der erzeugten Signale kombiniert wird. Auch eine solche Positionierung ist nicht durch eine Kombination von Modulen aus dem Stand der Technik möglich. Einerseits können die Signale der einzelnen Infrarot-Empfangsröhren durch das von anderen Modulen stammende Infrarotlicht gestört werden, so dass die Signale der einzelnen Module miteinander störend gekoppelt sind, so dass eine Gestenerkennung erschwert ist. Andererseits ist es aufgrund der Auslegungsgröße, der Raumstruktur, der Erfassungsanforderungen oder der Schaltungsverdrahtung auch schwierig, mehrere Module eng zusammen anzuordnen. Die mehreren Infrarot-Emissionsröhren und Infrarot-Empfangsröhren in der vorliegenden Erfindung teilen sich eine Steuerschaltung und einen Signalprozessor, was auch die Kosteneinsparung von der Hardware gegenüber dem Stand der Technik ermöglicht.

Gemäß einer Ausführungsform der Erfindung bestimmt der Signalprozessor einen Normalabstand des Objekts relativ zum Induktionsbereich abhängig von den von den Infrarot-Empfangsröhren erzeugten Signalen. Der Normalabstand bezeichnet den Abstand zwischen dem Objekt und dem Induktionsbereich in einer Richtung senkrecht zu der Erstreckungsrichtung der Infrarot-Emissionsröhren und der Infrarot-Empfangsröhren, d.h. den Abstand in der Höhenrichtung. Das Gestensteuermodul kann eine Bewegung des Objekts in der Normalrichtung erkennen, wenn der Normalabstand bestimmt werden kann, wodurch das Gestensteuermodul eine Geste in der Normalrichtung erkennen kann.

Gemäß einer Ausführungsform der Erfindung ist der Anfang und/oder das Ende des Induktionsbereichs eine Infrarot-Emissionsröhre. Dadurch wird sichergestellt, dass jede Infrarot-Empfangsröhre ein Infrarotsignal effizient empfangen kann.

Gemäß einer Ausführungsform der Erfindung ist die Erstreckungsrichtung eine Geradenrichtung, eine Faltlinienrichtung, eine ebene Tangentialrichtung oder eine räumliche Tangentialrichtung. Dabei können die Infrarot-Emissionsröhren und die Infrarot-Empfangsröhren entlang einer geraden Linie, einer Faltlinie, eines Dreiecks, eines Quadrats, eines Rechtecks, eines Parallelogramms, einer Kurve, eines Kreises, einer Ellipse oder einer unregelmäßigen Form innerhalb einer Ebene, oder entlang einer gekrümmten Fläche, wie einer zylindrischen, sphärischen, elliptischen, konischen Fläche, einem Hyperboloid, einer Paraboloiden oder einer unregelmäßigen gekrümmten Fläche innerhalb eines Raums verteilt sein. Dadurch kann die Form des Gestensteuermoduls der geometrischen Ausgestaltung der zu bedienenden Oberfläche folgen. Insbesondere sind die mehreren Infrarot-Emissionsröhren und Infrarot-Empfangsröhren im gleichen Abstand zueinander beanstandet angeordnet.

Gemäß einer Ausführungsform der Erfindung steuert die Steuerschaltung in zeitmultiplexer Weise das Ein- und Ausschalten der einzelnen Infrarot-Emissionsröhren und der einzelnen Infrarot-Empfangsröhren. Durch die Anwendung der zeitmultiplexen Steuerungsweise können die einzelnen Infrarot-Emissionsröhren und die einzelnen Infrarot-Empfangsröhren zeitlich versetzt ein- und ausgeschaltet werden, so dass die Störung der Infrarot-Empfangsröhren durch das reflektierte Licht der mehreren Infrarot-Emissionsröhren verringert wird und daher eine noch bessere Entkopplung der Signale ermöglicht.

Gemäß einer Ausführungsform der Erfindung steuert die Steuerschaltung das Ein- und Ausschalten der einzelnen Infrarot-Emissionsröhren und der einzelnen Infrarot-Empfangsröhren dadurch:
- gleichzeitiges Einschalten aller Infrarot-Empfangsröhren und Einschalten jeder Infrarot-Emissionsröhre nacheinander; oder
- Einschalten einer oder mehrerer Infrarot-Sende- /Empfangsgruppen nacheinander, wobei jede Infrarot-Sende- /Empfangsgruppe mindestens eine Infrarot-Emissionsröhre und mindestens eine Infrarot-Emissionsröhre umfasst, die nebeneinander liegen; oder
- zeitlich versetztes Einschalten mehrerer nicht benachbarten Infrarot-Sende-/Empfangsgruppen, wobei jede Infrarot-Sende- /Empfangsgruppe mindestens eine Infrarot-Emissionsröhre und mindestens eine Infrarot-Emissionsröhre umfasst, die nebeneinander liegen.

Bei dem gleichzeitigen Einschalten aller Infrarot-Empfangsröhren und bei dem Einschalten jeder Infrarot-Emissionsröhre nacheinander kann das von nur einer Infrarot-Empfangsröhre emittierte Infrarotlicht zu jedem Zeitpunkt nach Reflektion von den Infrarot-Empfangsröhren empfangen werden. Eine solche Einschaltweise kann die Störung der einzelnen Infrarot-Empfangsröhren mit dem von den mehreren Infrarot-Emissionsröhren reflektierten Licht vermeiden. Es ist auch denkbar, dass bei dem Einschalten jeder Infrarot-Emissionsröhre nacheinander nur eine oder mehrere der benachbarten Infrarot-Empfangsröhren eingeschaltet sind, beispielsweise zwei unmittelbar benachbart zu dieser Infrarot-Emissionsröhre angeordnete Infrarot-Empfangsröhren, wobei das von einer eingeschalteten Infrarot-Emissionsröhre emittierte Infrarotlicht reflektiert und von den benachbarten Infrarot-Empfangsröhren empfangen wird, was die Menge der von der Signalverarbeitungsvorrichtung zu verarbeitende Signale reduziert, wodurch die Datenverarbeitungseffizienz erhöht wird. Nachdem alle Infrarot-Emissionsröhren innerhalb des Induktionsbereichs nacheinander eingeschaltet wurden, wird dies als ein Abtastzyklus gezählt, und dann werden mehrere Abtastzyklen zirkuliert. Innerhalb eines Abtastzyklus kann jede Infrarot-Empfangsröhre eine folgende Zeitreihe von Signalen erzeugen, in der zu jedem Zeitpunkt von einer Infrarot-Emissionsröhre das Infrarotlicht emittiert wird. Daher kann der Signalprozessor einfach die Infrarot-Empfangsröhre bestimmen, die dem sich nähernden Objekt entspricht.

In einer Variante sind eine oder mehrere Infrarot-Sende- /Empfangsgruppen nacheinander eingeschaltet, wobei jede Infrarot-Sende-/Empfangsgruppe mindestens eine Infrarot-Emissionsröhre und mindestens eine Infrarot-Emissionsröhre umfasst, die nebeneinander liegen. Durch das gruppenweise Einschalten der einzelnen Infrarot-Emissionsröhren und den Infrarot-Empfangsröhren kann zu jedem Zeitpunkt jede Infrarot-Empfangsröhre nur ein Reflexionssignal aus derselben Gruppe von Infrarot-Emissionsröhren empfangen. Folglich wird die Komplexität der Signalverarbeitung reduziert und damit die Recheneffizienz erhöht.

In einer anderen Variante werden mehrere nicht benachbarten Infrarot-Sende-/Empfangsgruppen zeitlich versetzt eingeschaltet, wobei jede Infrarot-Sende-/Empfangsgruppe mindestens eine Infrarot-Emissionsröhre und mindestens eine Infrarot-Emissionsröhre umfasst, die nebeneinander liegen. Diese Variante ist im Fall eines längeren Induktionsbereichs von Vorteil, da es eine längere Zeit dauert, wenn jede Infrarot-Emissionsröhre nacheinander für die Erledigung einer einmaligen Signalabtastung eingeschaltet wird. Daher kann die Abtastzeit verkürzt werden, wenn mehrere nicht nebeneinander liegende Infrarot-Sende- /Empfangsgruppen gleichzeitig arbeiten.

Gemäß einer Ausführungsform der Erfindung wird die Koordinatenposition des Objekts in einer Erstreckungsrichtung oberhalb des Induktionsbereichs und/oder der Normalabstand des Objekts relativ zum Induktionsbereich aufgrund einer Amplitude und/oder einer Steigung und/oder einer Phase der einzelnen von Infrarot-Empfangsröhren erzeugten Signalen. Der Signalprozessor empfängt und verarbeitet die Zeitreihe von den mehreren Infrarot-Empfangsröhren erzeugten Signalen, zum Beispiel durch Vergleichen der Amplituden der Signale, um die Spitzenposition des reflektierten Lichts zu bestimmen und somit die Koordinatenposition eines Objekts zu bestimmen. Die Änderung des reflektierten Lichts kann beispielsweise durch Berechnung der Steigung der Signale bestimmt werden, um zu bestimmen, ob das Objekt eine Annäherungs- oder eine Entfernungsbewegung erfolgt. Beispielsweise können durch eine umfassende Berechnung der Änderung von Amplitude, Steigung und Phase der Signale genauere Koordinaten eines vorhandenen Objekts bestimmt werden. Durch die Bestimmung der Koordinatenposition des Objekts in der Erstreckungsrichtung oberhalb des Induktionsbereichs und des Normalabstands des Objekts zum Induktionsbereich, insbesondere der Änderung von der Koordinatenposition und dem Normalabstand, kann dabei die dynamische Änderung des Objekts oberhalb des Induktionsbereichs beurteilt werden und somit eine Erkennung von verschiedenartigen Gesten erreicht werden.

Am Beispiel der Bestimmung der Position des Objekts aufgrund der Amplitude kann in jedem Abtastzyklus das Gestensteuermodul das Signal mit der größten Amplitude durch Vergleichen der Zeitreihe von den empfangenen Signalen erhalten. Daher kann angenommen werden, dass sich das Objekt in der Nähe der Infrarot-Emissionsröhre befindet, das Signal mit der maximalen Amplitude erzeugt. Durch das Zirkulieren mehrerer Abtastzyklen kann die Position des Objektes ständig aktualisiert werden. Wird in mehreren Abtastzyklen erkannt, dass ein Signal mit der maximalen Amplitude auf verschiedenen Signalempfangsröhren vorliegt, so kann die Translationsbewegung des Objekts entlang der Erstreckungsrichtung oberhalb des Induktionsbereichs bestimmt werden. Wird dagegen erkannt, dass ein Signal mit stets relativ maximaler aber sich ändernder Amplitude nur auf derselben Signalempfangsröhre oder denselben Signalempfangsröhren vorliegt, so kann festgestellt werden, dass sich das Objekt nur in Normalrichtung bewegt. Darauf basierend kann erkannt werden, dass der Normalabstand eines Objekts von dem Induktionsbereich allmählich abnimmt, wenn die Amplitude eines Signals in der Zeitreihe von den Signalen allmählich zunimmt. Nimmt die Amplitude des Signals allmählich ab, so ist erkennbar, dass der Normalabstand des Objektes zum Induktionsbereich allmählich zunimmt.

Gemäß einer Ausführungsform der Erfindung ist der Induktionsbereich in mehreren Bedienteilbereichen aufgeteilt ist, wobei eine Geste für den Bedienteilbereich erkannt, wenn ein Objekt innerhalb des einen oder der mehreren Bedienteilbereichen erfasst wird. Auf diese Weise wird der Induktionsbereich in mehreren Bedienteilbereichen aufgeteilt. Wenn innerhalb der mehreren Abtastzyklen ein Objekt innerhalb des einen oder der mehreren Bedienteilbereichen erfasst wird, kann angenommen werden, dass das Objekt den entsprechenden Bedienteilbereich bedient, so dass nur Gesten im Bedienteilbereich erkannt werden und andere Bedienteilbereiche nicht berücksichtigt werden. Dadurch kann einerseits der Datenverarbeitungsmenge reduziert werden, andererseits wird eine gegenseitige Störung zwischen verschiedenen Funktionen, die im Induktionsbereich angeordnet sind, ermöglicht.

Gemäß einer Ausführungsform der vorliegenden Erfindung sind eine oder mehrere Leuchtvorrichtungen des sichtbaren Lichts um den Erfassungsbereich angeordnet. Die Leuchtvorrichtung des sichtbaren Lichts ist bevorzugt durch eine oder mehrere Leuchtdioden des sichtbaren Lichts im sichtbaren Bereich und bevorzugt entsprechende Optiken wie Lichtleiter, Lichtleiterkavität, Streuschicht des sichtbaren Lichts usw. realisiert.

Gemäß einer Ausführungsform der vorliegenden Erfindung weist die Leuchtvorrichtung des sichtbaren Lichts eine aktuelle Position des Objekts, eine eingegebene Geste oder einen Bedienhinweis an. Auf diese Weise werden dem Benutzer der benötigte Hinweis und Rückmeldungen bereitgestellt. Falls die eine oder die mehreren Leuchtvorrichtungen des sichtbaren Lichts in den Teilbereich unterteilt ist, der dem Bedienteilbereich auf dem Induktionsbereich entspricht, wird, wenn ein Objekt oberhalb des einen oder der mehreren Bedienteilbereichen erfasst wird, eine Beleuchtungsfarbe oder eine Beleuchtungshelligkeit der Leuchtvorrichtungen des sichtbaren Lichts in dem Bedienteilbereich geändert, so dass dem Benutzer zurückgespeist werden kann, um die Bedienung zu empfangen, und die aktuelle Position des Objekts entsprechend angezeigt werden kann. Ferner kann die Leuchtvorrichtung des sichtbaren Lichts mittels eines der Geste entsprechenden Ikons die eingegebene Geste indizieren, falls das Gestensteuermodul die Geste erkennt. Darüber hinaus kann die Leuchtvorrichtung des sichtbaren Lichts im Betrieb den Benutzer auf aktuell bedienbare Funktionen hinweisen. Beispielsweise wird der Benutzer in Form eines Wasserfalllichts hingewiesen, um nach links oder nach rechts zu winken. Eine Lichtrückmeldung an bereits erkannte Gesten kann auch in Form eines Blinkens erfolgen, beispielsweise durch zweimaliges Blinken, um dem Benutzer anzuzeigen, dass eine Geste erfasst wurde.

Gemäß einer Ausführungsform der vorliegenden Erfindung kann das Gestensteuermodul wenigstens eine oder eine Kombination der folgenden Gesten erkennen:
- gleitende Positionierung;
- Winken;
- Schweben;
- Klicken;
- Tippen.

Das Gestensteuermodul erkennt die entsprechende Geste entsprechend einer Änderung in der Position des Objekts innerhalb der mehreren Abtastzyklen. Die Geste für gleitende Positionierung repräsentiert eine Bewegung des Objekts, z.B. einer Hand, von einer beliebigen Position in einem Induktionsbereich des Gestensteuermoduls nach links oder nach rechts (bzw. nach oben oder nach unten), mit dem die Koordinatenposition des Objekts in der Erstreckungsrichtung und/oder der Normalabstand des Objekts relativ zu dem Induktionsbereich bestimmt werden kann. Die Winkgeste umfasst ein Winken nach links oder nach rechts, das darstellt, wie sich ein Objekt von einem Ende eines Induktionsbereichs zu einem anderen Ende des Induktionsbereichs bewegt. Insbesondere wird eine Winkgeste erkannt, wenn das Gestensteuermodul erfasst, dass sich das Objekt von einem Anfangsende zu einem Ende in der Erstreckungsrichtung oder von dem Ende zu einem Anfangsende des Induktionsbereichs bewegt. Eine Schwebegeste stellt dar, dass das Objekt für eine bestimmte Zeit in einem bestimmten Abstand über dem Induktionsbereich anhält. Folglich wird eine Schwebegeste erkannt, wenn das Gestensteuermodul Änderungen der Koordinatenposition des Objekts in der Erstreckungsrichtung und Änderungen des Normalabstands des Objekts relativ zu dem Induktionsbereich für eine Zeitdauer nicht erfasst. Die Klickgeste stellt dar, dass sich ein Objekt, das sich bereits in einem bestimmten Abstand befindet, dem Induktionsbereich weiter nähert. Somit wird die Klickgeste erkannt, wenn das Gestensteuermodul erkennt, dass der Normalabstand des Objekts an einer beliebigen Position des Induktionsbereichs relativ zum Induktionsbereich weiter verringert ist. Die Tippgeste stellt dar, dass sich das Objekt dem Gestensteuermodul aus einer bestimmten Entfernung in Normalrichtung mit einer bestimmten Geschwindigkeit allmählich nähert und innerhalb einer bestimmten Entfernung von der Oberfläche des Gestensteuermoduls für eine bestimmte Zeit anhält und sich danach mit einer bestimmten Geschwindigkeit allmählich in Normalrichtung vom Gestensteuermodul entfernt. Demzufolge wird die Tippgeste erkannt, wenn das Gestensteuermodul erkennt, dass der Normalabstand des Objekts an einer beliebigen Position des Induktionsbereichs relativ zum Induktionsbereich allmählich abnimmt und den bestimmten Normalabstand für eine Zeitdauer beibehält, und wenn es danach weiter erkannt, dass das Objekt an jeder Position des Induktionsbereichs einen allmählich zunehmenden Normalabstand zum Induktionsbereich aufweist.

Die oben beschriebene Gestenerfassung kann durch verschiedenen Parametern umfassend beurteilt werden, um die Zuverlässigkeit zu verbessern. Zum Beispiel kann das Hinzufügen der Beurteilung der weiteren Näherung von "aus einer bestimmten Entfernung mit einer bestimmten Geschwindigkeit weiter nähert" zur Klickgeste die Zuverlässigkeit effektiv erhöhen, insbesondere die Störung durch Ölrauch ausschließen kann. Durch die Kombination der Beurteilungen von "aus einer bestimmten Entfernung mit einer bestimmten Geschwindigkeit allmählich nähert" und "innerhalb einer bestimmten Entfernung von der Oberfläche des Gestensteuermoduls für eine bestimmte Zeit anhält" kann die durch den menschlichen Kopf verursachten Störungen effektiv herausfiltern. Zum Beispiel kann bei der Tippgeste die Beurteilungen" aus einer bestimmten Entfernung mit einer bestimmten Geschwindigkeit allmählich nähert", "innerhalb einer bestimmten Entfernung von der Oberfläche des Gestensteuermoduls für eine bestimmte Zeit anhält" und "sich danach mit einer bestimmten Geschwindigkeit allmählich vom Gestensteuermodul entfernt" die durch Ölrauch, Änderungen des Umgebungslichts und die Annäherung oder Bewegung des Kopfes verursachten Störungen sehr zuverlässig herausfiltern.

Gemäß einem zweiten Aspekt der Erfindung ist ein Haushaltsgerät vorgesehen, das eine oder mehrere oben beschriebene Gestensteuermodule umfasst. Es handelt sich bei dem Haushaltsgerät um eine Dunstabzugshaube, einen Kühlschrank, einen Backofen, eine Küchenmaschine, eine Waschmaschine, einen Smart-Wasserhahn oder einen Smart-Toilette. Durch das erfindungsgemäße berührungslose Gestensteuermodul ist es möglich, eine Bedienung an einem oben genannten Haushaltsgerät ohne Kontakt von Händen durchzuführen und eine Vielzahl von Gesten und Bedienfunktionen, insbesondere eine Feineinstellung und damit eine stufenlose Geschwindigkeitsregelung des Haushaltsgeräts zu ermöglichen.

Gemäß einem dritten Aspekt der Erfindung sieht eine Verwendung eines oben beschriebenen Gestensteuermoduls in dem Haushaltsgerät vor, wobei das Gestensteuermodul zum Steuern wenigstens einer der folgenden Funktionen des Haushaltsgeräts verwendet wird:
- Ein- oder Ausschalten des Haushaltsgeräts;
- Hochschalten/Herunterschalten;
- Umschalten des Bedienmodus;
- Feineinstellung der Gänge;
- spezifischer Modus;
- Ein- oder Ausschalten der Beleuchtungslampe.

Die oben genannten Funktionen sind übliche Funktionen vom Haushaltsgerät. Der spezifische Modus ist ein Modus einer stufenlosen Geschwindigkeitsregelung. Es ist auch möglich, mit dem Gestensteuermodul weitere Funktionen des Haushaltsgeräts zu steuern.

Gemäß einer Ausführungsform der Erfindung ist vorgesehen, dass in dieser Verwendung
- das Ein- oder Ausschalten des Haushaltsgeräts durch Schweben oder Klicken erfolgt;
- das Hochschalten/Herunterschalten und/oder Umschalten des Bedienmodus durch eine Winkgeste erfolgt;
- die Bestätigung durch eine Schweb- oder Klickgeste erfolgt;
- die Schalterfunktion durch eine Tippgeste erfolgt,
wobei durch die Geste für gleitende Verschiebung die Koordinatenposition der Hand oberhalb des Induktionsbereichs in der Erstreckungsrichtung und/oder der Normalabstand der Hand relativ zum Induktionsbereich erfassen kann, um die entsprechende Funktion auf dem Induktionsbereich gemäß den Koordinaten von Händen auszulösen. Durch die Schweb- oder Klickgeste ermöglicht eine Bestätigung, die eine Bestätigung des ausgelösten Modus oder eine Bestätigung der Feineinstellung der Gänge sein kann. Durch die Tippgeste ermöglicht die Schalterfunktion, die Funktion des Ein- oder Ausschaltens von Leuchten, des Ein- oder Ausschaltens von Türen, des Ein- oder Ausschaltens von Ventilen sein kann.

Gemäß einer Ausführungsform der Erfindung ist vorgesehen, dass, wenn das Haushaltsgerät eine Dunstabzugshaube ist,
- die entsprechende Funktion durch eine Geste für gleitende Positionierung ausgelöst wird;
- die ausgelöste Funktion durch Klicken oder Schweben ausgewählt wird;
- eine Winkgeste verwendet wird, um in den spezifischen Modus umzuschalten;
- die Feineinstellung der Gänge der Dunstabzugshaube durch eine Geste für gleitende Positionierung realisiert.

Beispielsweise wird der Induktionsbereich in einem Standby-Zustand der Dunstabzugshaube in eine Anzahl von üblichen Funktionen unterteilt: Ein-/ Ausschalten, Ein- / Ausschalten der Lichter, Windgeschwindigkeit im ersten Gang (niedrigste Windgeschwindigkeit), Windgeschwindigkeit im zweiten Gang (mittlere Windgeschwindigkeit); Windgeschwindigkeit im dritten Gang (höchste Windgeschwindigkeit); spezifischer Modus (also stufenlose Geschwindigkeitsregelung). Falls der Benutzer wünscht, einen spezifischen Modus auszuwählen, bewegt der Benutzer zuerst eine Hand auf den Induktionsbereich, der gewünschten Funktion, nämlich einem spezifischen Modus entspricht, durch die Geste für gleitende Verschiebung. Im Anschluss daran wird die Klick- oder Schwebegeste als Bestätigung für einen spezifischen Modus verwendet. Woraufhin wird die Dunstabzugshaube durch der Winkgeste in den spezifischen Modus umgeschaltet. In dem spezifischen Modus wird der Induktionsbereich gemäß den Koordinaten des Objekts in der Erstreckungsrichtung fein in mehrere Teilbereiche aufgeteilt. Der Benutzer ermöglicht die Feineinstellung der Gänge der Dunstabzugshaube durch eine Geste für gleitende Positionierung.

In der vorliegenden Erfindung sind die für einen Aspekt beschriebenen Funktionen, Wirkungen oder Vorteile auf entsprechende Weise auf andere Aspekte der vorliegenden Erfindung anwendbar und umgekehrt.

Mehrere Ausführungsbeispiele werden anhand der nachfolgenden Zeichnung und Beschreibung näher erläutert. Es zeigen
- Fig. 1: eine schematische Darstellung eines erfindungsgemäßen berührungslosen Gestensteuermoduls, das auf dem Prinzip der Infrarotreflexion basiert;
- Fig. 2: einen Ablaufplan, bei dem die Steuerschaltung gemäß einer ersten Ausführungsform das Ein- und Ausschaltens der einzelnen InfrarotEmissionsröhren und der einzelnen Infrarot-Empfangsröhren steuert;
- Fig. 3: einen Ablaufplan, bei dem die Steuerschaltung gemäß einer zweiten Ausführungsform das Ein- und Ausschaltens der einzelnen InfrarotEmissionsröhren und der einzelnen Infrarot-Empfangsröhren steuert;
- Fig. 4: einen Ablaufplan, bei dem die Steuerschaltung gemäß einer dritten Ausführungsform das Ein- und Ausschaltens der einzelnen InfrarotEmissionsröhren und der einzelnen Infrarot-Empfangsröhren steuert;
- Fig. 5: einen Ablaufplan, bei dem die Steuerschaltung gemäß einer vierten Ausführungsform das Ein- und Ausschaltens der einzelnen InfrarotEmissionsröhren und der einzelnen Infrarot-Empfangsröhren steuert;
- Fig. 6: eine schematische Darstellung eines anderen erfindungsgemäßen berührungslosen Gestensteuermoduls, das auf dem Prinzip der Infrarotreflexion basiert.

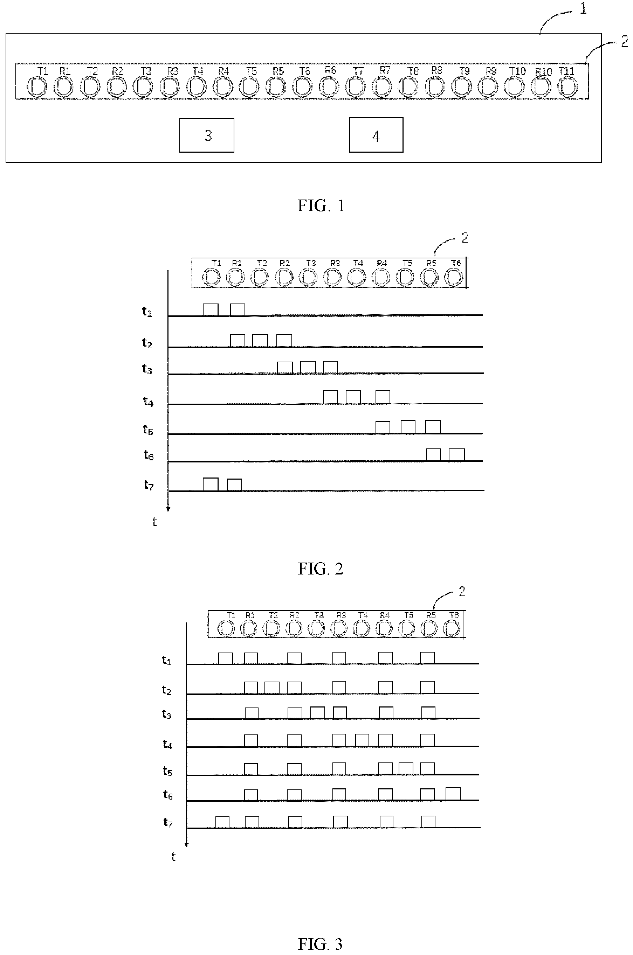

Fig. 1 zeigt eine schematische Darstellung eines erfindungsgemäßen berührungslosen Gestensteuermodul 1, das auf dem Prinzip der Infrarotreflexion basiert. Das Gestensteuermodul 1 umfasst einen Induktionsbereich 2, der aus elf Infrarot-Emissionsröhren T1-T11 und zehn Infrarot-Empfangsröhren R1-R10 besteht. Dabei ist der Anfang und/oder das Ende des Induktionsbereichs 2 eine Infrarot-Emissionsröhre. Es können jedoch auch andere Anzahlen von mehreren Infrarot-Emissionsröhren und Infrarot-Empfangsröhren vorgesehen sein. Die Infrarot-Emissionsröhren und die Infrarot-Empfangsröhren sind abwechselnd entlang einer graden Linie angeordnet. Es ist jedoch auch denkbar, dass Erstreckungsrichtung eine Geradenrichtung, eine Faltlinienrichtung, eine ebene Tangentialrichtung oder eine räumliche Tangentialrichtung sein kann. Außerdem umfasst das Gestensteuermodul 1 eine Steuerschaltung 3 und einen Signalprozessor 4. Die Steuerschaltung 3 dient zum Steuern des Ein- und Ausschaltens der einzelnen Infrarot-Emissionsröhren und der einzelnen Infrarot-Empfangsröhren. Der Signalprozessor 4 dient zum Empfangen und Verarbeiten der durch mehrere Infrarotempfangsröhren erzeugten Signale und zur Bestimmung der Koordinatenposition des Objekts in einer Erstreckungsrichtung oberhalb des Induktionsbereichs.

Fig. 2 zeigt einen Ablaufplan, bei dem die Steuerschaltung 3 gemäß einer ersten Ausführungsform das Ein- und Ausschaltens der einzelnen Infrarot-Emissionsröhren und der einzelnen Infrarot-Empfangsröhren steuert. Die Steuerschaltung 3 dient zum Steuern des Ein- und Ausschaltens der einzelnen Infrarot-Emissionsröhren und der einzelnen Infrarot-Empfangsröhren in zeitmultiplexer Weise. Zur deutlichen Erläuterung der Steuerungsweise sind in Fig. 2 nur sechs Infrarot-Emissionsröhren T1-T6 und fünf Infrarot-Empfangsröhren R1-R5 dargestellt. In der Figur repräsentiert die Ordinate die Zeit, und die Abszisse den Zustand der einzelnen Infrarot-Emissionsröhren und Infrarot-Empfangsröhren, wobei ein hoher Pegel einen eingeschalteten Zustand repräsentiert und ein niedriger Pegel einen ausgeschalteten Zustand repräsentiert. Bei dem Einschalten jeder Infrarot-Emissionsröhre nacheinander werden in Fig. 2 nur die zu dieser benachbart angeordneten Infrarot-Empfangsröhren eingeschaltet. Hier wird das von einer eingeschalteten Infrarot-Emissionsröhre emittierte Infrarotlicht reflektiert und dann von der benachbarten Infrarot-Empfangsröhre(n) empfangen, was die Anzahl der zu verarbeitenden von der Infrarot-Empfangsröhre erzeugten Signale verringert wird, wodurch die Datenverarbeitung erleichtert wird. In der vorliegenden Ausführungsform werden zum Zeitpunkt t1 die Infrarot-Emissionsröhre T1 und die Infrarot-Empfangsröhre R1 eingeschaltet, wobei das reflektierte Licht der Infrarot-Emissionsröhre T1 von der Infrarot-Empfangsröhre R1 empfangen wird, so dass zum Zeitpunkt t1 auf der Infrarot-Empfangsröhre R1 ein Signal S1 erzeugt wird. Dann werden zum Zeitpunkt t2 die Infrarot-Emissionsröhre T2 und die benachbarten Infrarot-Empfangsröhren R1, R2 eingeschaltet, wobei das reflektierte Licht der Infrarot-Emissionsröhre T2 von den Infrarot-Empfangsröhren R1 und R2 empfangen, so dass zum Zeitpunkt t2 auf der Infrarot-Empfangsröhre R1 das Signal S2 und auf der Infrarot-Empfangsröhre R2 das Signal S3 erzeugt werden. Anschließend werden die einzelnen Infrarot-Emissionsröhren nacheinander eingeschaltet. Nach der Erledigung einer einmaligen Abtastung kann durch Vergleichen der Amplitude und/oder Steigung und/oder Phase der auf jeder Empfangsröhre erzeugten Signale S1-S10 beurteilt werden, dass sich das Objekt mindestens in der Nähe einer oder mehrerer Infrarot-Empfangsröhren befindet, so dass die Koordinaten von das Objekt kann erhalten werden. Der Abtastvorgang zirkuliert kontinuierlich, so dass die Bewegungstrajektorie des Objekts und damit die Geste beurteilt werden kann.

Fig. 3 zeigt einen Ablaufplan, bei dem die Steuerschaltung 3 gemäß einer zweiten Ausführungsform das Ein- und Ausschaltens der einzelnen Infrarot-Emissionsröhren und der einzelnen Infrarot-Empfangsröhren steuert. Der Unterschied zur ersten Ausführungsform besteht darin, dass alle Infrarot-Empfangsröhren R1-R5 gleichzeitig eingeschaltet werden und so lange die eingeschalteten Zustände der einzelnen Infrarot-Empfangsröhren beibehalten werden, während jede Infrarot-Emissionsröhre T1-T6 zeitlich nacheinander eingeschaltet wird. Somit sendet zu jedem Zeitpunkt nur eine Infrarot-Emissionsröhre das Infrarotlicht aus, dessen reflektiertes Licht von allen Infrarot-Empfangsröhren empfangen werden kann. In der zweiten Ausführungsform kann jede Infrarot-Empfangsröhre innerhalb einem Abtastzyklus das Reflexionssignal der einzelnen Infrarot-Emissionsröhren zu unterschiedlichen Zeitpunkten empfangen, wodurch eine genauere Beurteilung der Koordinaten eines Objekts ermöglicht wird.

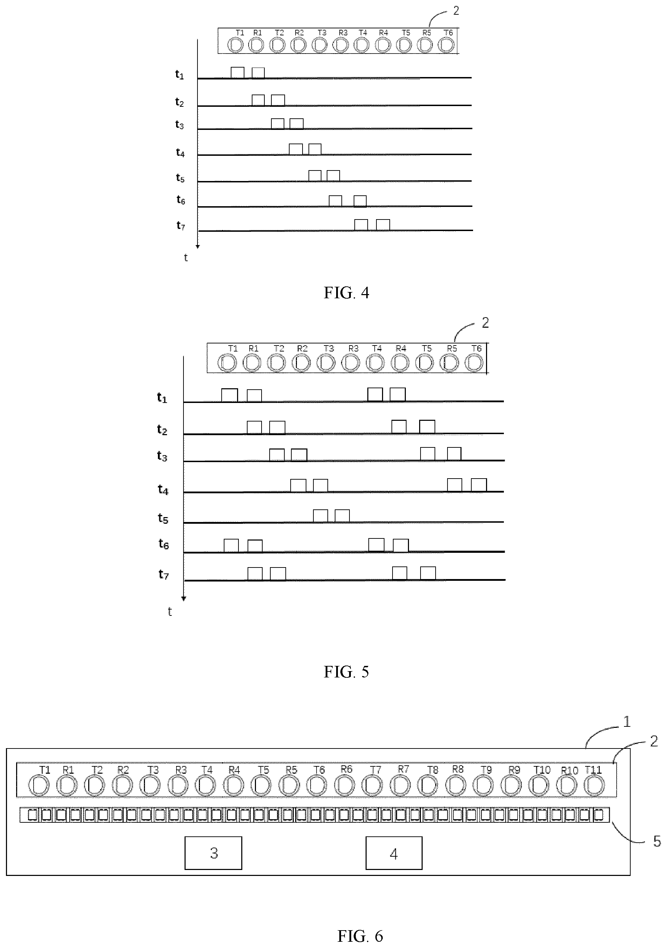

Fig. 4 zeigt einen Ablaufplan, bei dem die Steuerschaltung 3 gemäß einer dritten Ausführungsform das Ein- und Ausschaltens der einzelnen Infrarot-Emissionsröhren und der einzelnen Infrarot-Empfangsröhren steuert. In der dritten Ausführungsform sind eine oder mehrere Infrarot-Sende- /Empfangsgruppen nacheinander eingeschaltet, wobei jede Infrarot-Sende-/Empfangsgruppe mindestens eine Infrarot-Emissionsröhre und mindestens eine Infrarot-Emissionsröhre umfasst, die nebeneinander liegen. Im vorliegenden Ausführungsbeispiel umfasst jede Infrarot-Sende-/Empfangsgruppe eine Infrarot-Emissionsröhre und eine Infrarot-Emissionsröhre, die nebeneinander liegen. Im Gegensatz zur ersten Ausführungsform kann zu jedem Zeitpunkt jede Infrarot-Empfangsröhre nur ein Reflexionssignal aus derselben Gruppe von Infrarot-Emissionsröhren aussenden. Daher kann die Komplexität der Signalverarbeitung verringert und die Recheneffizienz verbessert werden.

Fig. 5 zeigt einen Ablaufplan, bei dem die Steuerschaltung 3 gemäß einer vierten Ausführungsform das Ein- und Ausschaltens der einzelnen Infrarot-Emissionsröhren und der einzelnen Infrarot-Empfangsröhren steuert. In der vierten Ausführungsform werden mehrere nicht benachbarten Infrarot-Sende-/Empfangsgruppen zeitlich versetzt eingeschaltet, wobei jede Infrarot-Sende- /Empfangsgruppe mindestens eine Infrarot-Emissionsröhre und mindestens eine Infrarot-Emissionsröhre umfasst, die nebeneinander liegen. Im Fall eines längeren Induktionsbereichs von Vorteil dauert es eine längere Zeit, wenn jede Infrarot-Emissionsröhre nacheinander für die Erledigung einer einmaligen Signalabtastung eingeschaltet wird. Daher kann die Abtastzeit verkürzt werden, wenn mehrere nicht nebeneinander liegenden Infrarot-Sende-/Empfangsgruppen gleichzeitig arbeiten.

Fig. 6 zeigt eine schematische Darstellung eines anderen erfindungsgemäßen berührungslosen Gestensteuermoduls, das auf dem Prinzip der Infrarotreflexion basiert. Im Gegensatz zur in Fig. 1 gezeigten Ausführungsform sind im Fig. 6 gezeigten Gestensteuermodul mehrere Leuchtvorrichtungen 5 des sichtbaren Lichts um den Induktionsbereich 2 angeordnet. In der vorliegenden Ausführungsform ist die gezeigte Leuchtvorrichtung 5 des sichtbaren Lichts als mehrere Leuchtdioden des sichtbaren Lichts dargestellt. Es sind jedoch auch andere Optiken wie Lichtleiter, Lichtleiterkavität, Streuschicht sichtbaren Lichts usw. möglich. Die Leuchtvorrichtung des sichtbaren Lichts weist eine aktuelle Position des Objekts, eine eingegebene Geste oder einen Betätigungshinweis an.

Die Erfindung beschränkt sich nicht auf die gezeigten Ausführungsbeispiele, sondern umfasst bzw. erstreckt sich auf alle technischen Äquivalente, welche die Reichweite der beigefügten Ansprüche fallen können. Auch sind die in der Beschreibung gewählten Lageangaben, wie zum Beispiel oben, unten, links, rechts usw. auf die unmittelbare Beschreibung sowie dargestellte Figur bezogen und sind bei einer Lageänderung sinngemäß auf die neue Lage zu übertragen.

## Patentansprüche

1. Berührungsloses Gestensteuermodul, das auf dem Prinzip der Infrarotreflexion basiert, umfassend:
- einen Induktionsbereich, der aus mehreren Infrarot-Emissionsröhren und mehreren Infrarot-Empfangsröhren besteht, wobei die Infrarot-Emissionsröhren und die Infrarot-Empfangsröhren abwechselnd in einer Erstreckungsrichtung angeordnet sind;
- eine Steuerschaltung zum Steuern des Ein- und Ausschaltens der einzelnen Infrarot-Emissionsröhren und der einzelnen Infrarot-Empfangsröhren;
- einen Signalprozessor zum Empfangen und Verarbeiten der durch die Vielzahl von Infrarot-Empfangsröhren erzeugten Signale und zum Bestimmen der Koordinatenposition des Objekts in einer Erstreckungsrichtung oberhalb des Induktionsbereichs.

2. Gestensteuermodul nach Anspruch 1, **dadurch gekennzeichnet, dass** der Signalprozessor einen Normalabstand des Objekts relativ zum Induktionsbereich abhängig von den von den Infrarot-Empfangsröhren erzeugten Signalen bestimmt.

3. Gestensteuermodul nach Anspruch 1 oder 2, **dadurch gekennzeichnet, dass** der Anfang und/oder das Ende des Induktionsbereichs eine Infrarot-Emissionsröhre ist.

4. Gestensteuermodul nach einem der Ansprüche 1 bis 3, **dadurch gekennzeichnet, dass** die Erstreckungsrichtung eine Geradenrichtung, eine Faltlinienrichtung, eine ebene Tangentialrichtung oder eine räumliche Tangentialrichtung ist.

5. Gestensteuermodul nach einem der Ansprüche 1 bis 4, **dadurch gekennzeichnet, dass** die Steuerschaltung das Ein- und Ausschalten der einzelnen Infrarot-Emissionsröhren und der einzelnen Infrarot-Empfangsröhren in zeitmultiplexer Weise steuert.

6. Gestensteuermodul nach Anspruch 5, **dadurch gekennzeichnet, dass** die Steuerschaltung das Ein- und Ausschalten der einzelnen Infrarot-Emissionsröhren und der einzelnen Infrarot-Empfangsröhren dadurch steuert:
- gleichzeitiges Einschalten aller Infrarot-Empfangsröhren und Einschalten jeder Infrarot-Emissionsröhre nacheinander; oder
- Einschalten einer oder mehrerer Infrarot-Sende- /Empfangsgruppen nacheinander, wobei jede Infrarot-Sende- /Empfangsgruppe mindestens eine Infrarot-Emissionsröhre und mindestens eine Infrarot-Emissionsröhre umfasst, die nebeneinander liegen; oder
- zeitlich versetztes Einschalten mehrerer nicht benachbarten Infrarot-Sende-/Empfangsgruppen, wobei jede Infrarot-Sende- /Empfangsgruppe mindestens eine Infrarot-Emissionsröhre und mindestens eine Infrarot-Emissionsröhre umfasst, die nebeneinander liegen.

7. Gestensteuermodul nach einem der Ansprüche 1 bis 6, **dadurch gekennzeichnet, dass** der Induktionsbereich in mehreren Bedienteilbereichen aufgeteilt ist, wobei eine Geste für den Bedienteilbereich erkannt wird, wenn ein Objekt innerhalb des einen oder der mehreren Bedienteilbereichen erfasst wird.

8. Gestensteuermodul nach einem der Ansprüche 1 bis 7, **dadurch gekennzeichnet, dass** die Koordinatenposition des Objekts in einer Erstreckungsrichtung oberhalb des Induktionsbereichs aufgrund einer Amplitude und/oder einer Steigung und/oder einer Phase der einzelnen von Infrarot-Empfangsröhren erzeugten Signalen bestimmt wird.

9. Gestensteuermodul nach einem der Ansprüche 2 bis 8, **dadurch gekennzeichnet, dass** der Normalabstand des Objekts relativ zum Induktionsbereich aufgrund einer Amplitude und/oder einer Steigung und/oder einer Phase der einzelnen von Infrarot-Empfangsröhren erzeugten Signalen bestimmt wird.

10. Gestensteuermodul nach einem der Ansprüche 1 bis 9, **dadurch gekennzeichnet, dass** eine oder mehrere Leuchtvorrichtungen des sichtbaren Lichts um den Erfassungsbereich angeordnet sind.

11. Gestensteuermodul nach Anspruch 10, **dadurch gekennzeichnet, dass** die Leuchtvorrichtung des sichtbaren Lichts eine aktuelle Position des Objekts, eine eingegebene Geste oder einen Bedienhinweis anweist.

12. Gestensteuermodul nach einem der Ansprüche 1 bis 11, **dadurch gekennzeichnet, dass** das Gestensteuermodul wenigstens eine oder eine Kombination der folgenden Gesten erkennen kann:
- gleitende Positionierung;
- Winken;
- Schweben;
- Klicken;
- Tippen.

13. Haushaltsgerät, welches ein oder mehrere Gestensteuermodule nach einem der Ansprüche 1 bis 12 umfasst.

14. Haushaltsgerät nach Anspruch 13, **dadurch gekennzeichnet, dass** es sich bei dem Haushaltsgerät um eine Dunstabzugshaube, einen Kühlschrank, einen Backofen, eine Küchenmaschine, eine Waschmaschine, einen Smart-Wasserhahn oder eine Smart-Toilette handelt.

15. Verwendung des Gestensteuermoduls nach einem der Ansprüche 1 bis 11 in dem Haushaltsgerät, wobei das Gestensteuermodul zum Steuern wenigstens einer der folgenden Funktionen des Haushaltsgeräts verwendet wird:
- Ein- oder Ausschalten des Haushaltsgeräts;
- Hochschalten/Herunterschalten;
- Umschalten des Bedienmodus;
- Feineinstellung der Gänge;
- spezifischer Modus;
- Ein- oder Ausschalten der Beleuchtungslampe.

16. Verwendung nach Anspruch 15, **dadurch gekennzeichnet, dass**
- das Ein- oder Ausschalten des Haushaltsgeräts durch Klicken oder Schweben erfolgt;
- das Hochschalten/Herunterschalten und/oder Umschalten des Bedienmodus durch eine Winkgeste erfolgt;
- die Bestätigung durch eine Schweb- oder Klickgeste erfolgt;
- die Schalterfunktion durch eine Tippgeste erfolgt.

17. Verwendung nach Anspruch 16, **dadurch gekennzeichnet, dass**, wenn das Haushaltsgerät eine Dunstabzugshaube ist,
- die entsprechende Funktion durch eine Geste für gleitende Positionierung ausgelöst wird;
- die ausgelöste Funktion durch Klicken oder Schweben ausgewählt wird;
- eine Winkgeste verwendet wird, um in den spezifischen Modus umzuschalten;
- die Feineinstellung der Gänge der Dunstabzugshaube durch eine Geste für gleitende Positionierung realisiert.
